# DEMANDE DE BREVET EUROPEEN

(11) **EP 0 942 406 A1**
(43) Date de publication de la demande: **15.09.1999**
(21) Numéro de dépôt: 99200616.3
(22) Date de dépôt: 03.03.1999
(51) Int. Cl.: G09G 1/16, G09G 3/00

(54) **Affichage point par point sur écran semi-graphique**

(30) Priorité: 10.03.1998 FR 9802908
(71) Demandeur: Koninklijke Philips Electronics N.V., 5621 BA Eindhoven (NL)
(72) Inventeur: Wuilmot, David, 75008 Paris (FR); Decotignie, Philippe, 75008 Paris (FR)
(74) Mandataire: Chaffraix, Jean

(57) **Abrégé**

L'invention permet d'afficher un graphique quelconque, point par point, sur un écran à cristaux liquides qui est commandé par un contrôleur d'écran semi-graphique. L'invention s'applique notamment à l'affichage d'idéogrammes sur un écran à cristaux liquides.

Elle a également pour but de fournir un unique dispositif matériel (écran + contrôleur d'écran) qui permet de réaliser une interface homme - machine dans une langue à caractères alphanumériques ou dans une langue à idéogrammes.

Selon l'invention, l'écran à cristaux liquides comporte une zone de points qui est commandée à partir de la mémoire CGRAM du contrôleur semi-graphique. Cette mémoire est programmée par le microprocesseur de l'équipement en fonction du graphique à afficher.

## Description

L'invention concerne un équipement électronique, et notamment un téléphone, doté d'un écran à cristaux liquides commandé par un contrôleur d'écran de type semi-graphique.

L'invention concerne également un dispositif d'écran qui comporte un écran à cristaux liquides et un contrôleur d'écran de type semi-graphique.

Elle concerne enfin un procédé d'affichage sur un écran à cristaux liquides commandé par un contrôleur d'écran de type semi-graphique, et un procédé d'affichage d'idéogrammes sur un écran à cristaux liquides.

L'invention a d'importantes applications dans le domaine de l'électronique grand public, notamment dans le domaine de la téléphonie mobile.

Le manuel d'utilisation intitulé «Fizz Etacs User Manual» de septembre 1996 décrit le fonctionnement et le mode d'emploi d'un téléphone mobile commercialisé sous la marque «Fizz» par la société Philips. Comme cela apparaît sur la figure de la page 11 de ce manuel, ce téléphone utilise un écran commandé par un contrôleur d'écran semi-graphique. Ce contrôleur est utilisé de façon classique pour afficher des caractères dans des blocs de points de l'écran.

L'invention a pour but de proposer un autre mode d'utilisation de ce type de contrôleur, afin d'étendre les possibilités d'affichage à l'écran.

Pour cela, un équipement téléphonique selon l'invention et tel que défini dans le paragraphe introductif est caractérisé en ce que ledit écran comporte au moins une zone de points pour afficher un graphique, et en ce que ledit équipement comporte des moyens de découpage par blocs dudit graphique, et des moyens d'inscription desdits blocs dans une mémoire dite mémoire de blocs dudit contrôleur pour un affichage bloc par bloc dudit graphique.

De même un procédé d'affichage selon l'invention et tel que défini dans le paragraphe introductif est caractérisé en ce que ledit écran comportant au moins une zone de points pour afficher un graphique, ledit procédé comporte une étape de découpage par blocs dudit graphique, et une étape d'inscription desdits blocs dans une mémoire dite mémoire de blocs dudit contrôleur, pour un affichage bloc par bloc dudit graphique.

Et un dispositif d'écran selon l'invention et tel que décrit dans le paragraphe introductif est caractérisé en ce que ledit écran comporte au moins une zone de points pour afficher un graphique, et en ce que ledit contrôleur comporte une mémoire dite mémoire de blocs pour stocker une décomposition en blocs dudit graphique pour un affichage bloc par bloc dans ladite zone de points.

Les contrôleurs semi-graphiques sont normalement utilisés pour commander l'affichage sur des écrans constitués de blocs de points. Ils permettent d'afficher dans chaque bloc de points des caractères qui sont stockés dans le contrôleur. L'affichage de graphiques nécessite à priori l'utilisation d'un contrôleur graphique permettant de commander l'affichage point par point. Toutefois ces contrôleurs graphiques ont un coût important. L'invention qui permet d'afficher des graphiques dans une zone de points de l'écran, en utilisant un contrôleur d'écran semi-graphique est donc particulièrement intéressante.

Une application particulièrement intéressante de l'invention est l'affichage d'idéogrammes. En effet, un autre problème qui se pose avec les langues à idéogrammes, est que chaque idéogramme nécessite pour sa représentation un nombre de points bien supérieur à celui qui est utilisé pour représenter un caractère alphanumérique. A titre d'exemple, un bloc de 12*12 points est nécessaire pour représenter un idéogramme chinois, alors qu'un bloc de 8*5 points suffit pour représenter un caractère alphanumérique. Et les contrôleurs d'écran qui sont actuellement produits en série ne permettent pas de commander des blocs de 12*12 points. L'invention qui permet d'afficher des idéogrammes dans une zone de points de l'écran, en utilisant un contrôleur d'écran semi-graphique fournit donc une solution à bas coût au problème de l'affichage d'idéogrammes.

L'invention permet également de réaliser avec un même dispositif matériel (écran, et contrôleur d'écran) un équipement qui est doté d'une interface homme - machine dans une langue à idéogrammes (par exemple le chinois ou le KANJI), et un équipement qui est doté d'une interface homme - machine dans une langue à caractères alphanumériques. En d'autres termes, elle permet de réaliser un produit standard du point de vue matériel, adaptable pour tenir compte des différentes contraintes liées aux pays de commercialisation de l'équipement, ce qui permet de réduire les coûts de production des équipements.

Lorsque ce dispositif est utilisé sur un équipement qui comporte une interface homme - machine dans une langue à caractères alphanumériques, ladite zone de points est avantageusement prolongée par une zone de blocs de points. En effet, pour exprimer un concept, il est nécessaire d'utiliser un nombre relativement important de caractères alphanumériques, alors que deux ou trois idéogrammes suffisent dans une langue à idéogrammes.

L'invention sera mieux comprise et d'autres détails apparaîtront dans la suite de la description, en regard des dessins annexés qui sont donnés à titre d'exemples non limitatifs et dans lesquels :
- la figure 1 représente un exemple d'équipement selon l'invention,
- les figures 2 et 3 représentent chacune un mode d'utilisation d'un équipement selon l'invention,
- les figures 4 et 5 donnent des exemples de correspondance entre points de l'écran, bloc en mémoire et adresse de mémorisation,
- la figure 6 représente un exemple de procédé d'affichage selon l'invention.

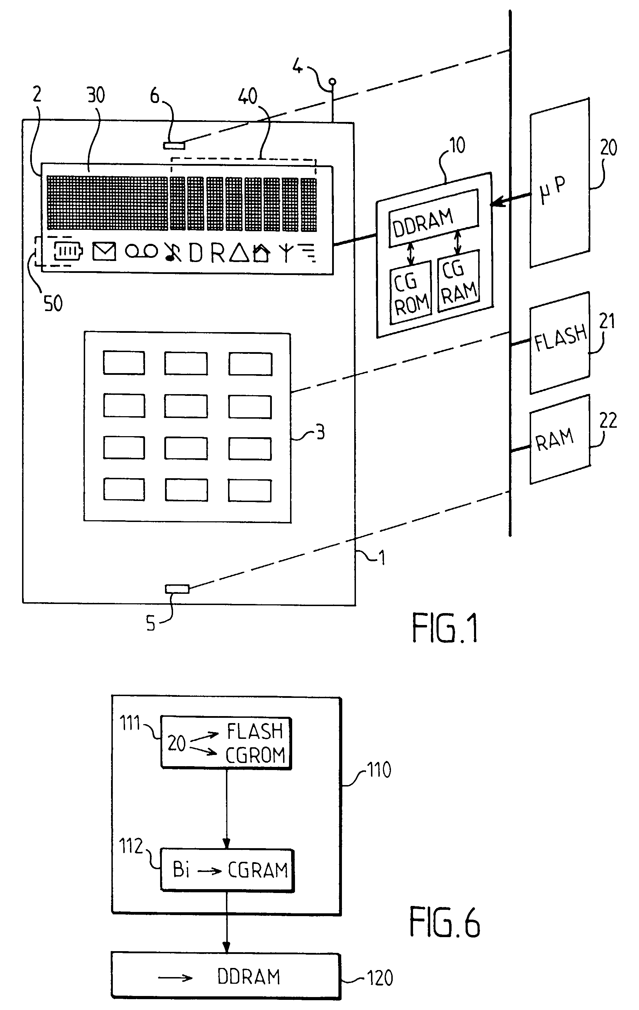

La figure 1 représente de façon schématique un exemple d'équipement selon l'invention. Cet équipement est un téléphone mobile 1 qui est notamment doté d'un écran à cristaux liquides 2, d'un clavier 3, d'une antenne 4, d'un microphone 5, d'un écouteur 6. L'écran à cristaux liquides 2 est commandé par un contrôleur d'écran 10 qui est lui-même commandé par un ensemble à microprocesseur 20. Le téléphone mobile 1 comporte également une mémoire programmable 21, par exemple une mémoire FLASH, et une mémoire externe 22, par exemple une mémoire RAM. Dans l'exemple décrit, ces mémoires 21 et 22 sont organisées par mots de 8 bits.

A titre d'exemple, on utilise le contrôleur d'écran PCF2119 fabriqué par Philips Semiconductors. Ce contrôleur d'écran 10 est un contrôleur semi-graphique dont on va maintenant rappeler succinctement le mode de fonctionnement. Pour plus de détails on se reportera aux spécifications «Data sheet, PCF2119 family» daté le 18 septembre 1997 et publié par Philips Semiconductors.

Un tel contrôleur comporte trois mémoires couramment appelées DDRAM (de l'anglais « Display Data RAM »), CGROM (de l'anglais «Character Generator ROM») et CGRAM (de l'anglais «Character Generator RAM»). La mémoire CGROM contient des caractères classiques (par exemple les caractères ASCII) qui sont pré - enregistrés dans la mémoire du contrôleur. La mémoire CGRAM est une mémoire programmable dans laquelle on peut venir inscrire des caractères point par point. A titre d'exemple le contrôleur PCF2119 est doté d'une mémoire CGRAM qui peut contenir 16 caractères au format 8x5. La mémoire DDRAM enfin est une image de l'écran en ce sens qu'elle contient pour chaque emplacement de l'écran l'adresse en CGRAM ou en CGROM du caractère à afficher à cet emplacement.

Conformément à l'invention, l'écran 2 comporte une première zone qui porte la référence 30 et qui est une zone de points. Elle est prolongée par une seconde zone qui porte la référence 40 et qui est une zone de blocs de points. Dans l'exemple décrit ici, la zone 30 a la forme d'une matrice de 16x38 points, et la zone 40 est constituée de deux lignes de 8 blocs chacune, chaque bloc ayant la forme d'une matrice de 8x5 points. Dans cet exemple, on a également prévu en bas de l'écran une barre d'icônes pré - dessinées qui porte la référence 50. Chacune desdites icônes est susceptible d'être allumée ou éteinte indépendamment des autres.

L'invention consiste à utiliser la mémoire programmable CGRAM pour commander un affichage point par point sur l'écran. Conformément à l'invention, l'affichage dans la zone de points 30 et sur la barre d'icônes 50 se fait donc à partir de la CGRAM. Et l'affichage dans la zone de blocs de points 40 se fait de façon classique à partir de la CGROM. Dans l'exemple qui est décrit ici, la mémoire CGRAM contient au maximum 16 caractères de 8x5 points. Elle permet donc de commander au maximum 16x40 points sur l'écran. Dans les deux modes de réalisation qui seront décrits par la suite à titre d'exemple, on utilise 16x38 points pour la zone 30 et dix points pour la barre d'icônes 50.

La mémoire FLASH 21 du téléphone est programmée pour contenir tous les caractères «spéciaux» qui sont susceptibles d'être utilisés dans la zone de points 30, à l'exception des caractères «classiques» qui sont déjà contenus dans la mémoire CGROM du contrôleur d'écran. Pour l'affichage d'un graphique dans la zone de points 30, le microprocesseur du téléphone va lire, soit dans la mémoire CGROM du contrôleur, soit dans la mémoire FLASH du téléphone, les éléments qui composent ce graphique. Ces éléments sont inscrits point par point dans la mémoire RAM 22 du téléphone en fonction de l'emplacement auquel ils doivent apparaître à l'écran. La mémoire RAM 22 est ensuite lue par le microprocesseur 20 de façon à inscrire dans la mémoire CGRAM du contrôleur les 16 blocs 8x5 qui composent la zone 30 de l'écran.

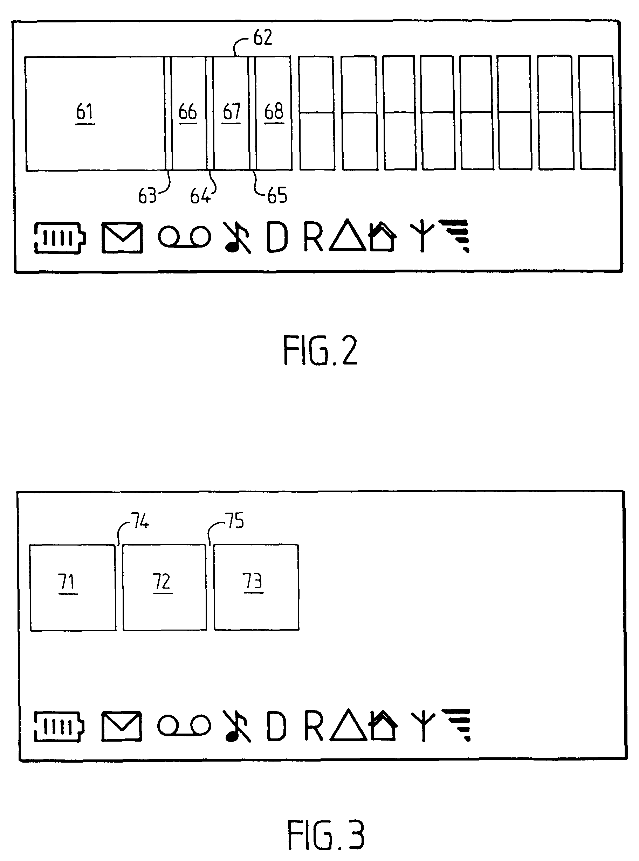

Dans un premier mode de réalisation décrit en regard de la figure 2, le téléphone selon l'invention est doté d'une interface homme - machine dans une langue à caractères alphanumériques, en français par exemple. Dans ce premier mode de réalisation tout l'écran est utilisé. La zone 30 est découpée de la façon suivante :
- une première partie 61 de la zone 30 a la forme d'une matrice de 16x20 points ; elle est utilisée pour afficher des icônes programmables (ou «soft icons» en anglais) ;
- une seconde partie 62 de la zone 30 comporte trois colonnes 63, 64 et 65 qui servent à séparer trois rangées de caractères 66, 67 et 68. Cette seconde partie est donc utilisée pour afficher des caractères alphanumériques. La zone 40 vient prolonger cette seconde partie 62 de telle sorte que l'on dispose de deux lignes de 11 caractères chacune pour écrire un ou plusieurs mots.

Dans ce premier mode de réalisation, la mémoire FLASH 21 contient notamment toutes les icônes programmables qui sont susceptibles d'être affichées dans la première partie 61 de la zone de points. Les caractères alphanumériques «classiques» sont lus dans la mémoire CGROM.

Dans un second mode de réalisation, décrit sur la figure 3, le téléphone portable selon l'invention est doté d'une interface homme - machine dans une langue à idéogrammes, en chinois par exemple. Dans ce second mode de réalisation seule la barre d'icônes 50 et la zone 30 sont utilisées. La zone 30 est alors découpée en trois pavés 71, 72 et 73 de 12x 12 points chacun, séparés par deux colonnes 74 et 75. Chaque pavé permet d'afficher un idéogramme chinois. Trois idéogrammes sont en général suffisant pour écrire une phrase.

Dans ce second mode de réalisation, la mémoire FLASH 21 contient notamment tous les idéogrammes chinois qui sont susceptibles d'être affichés à l'écran.

Pour des raisons de simplicité, on a choisi de stocker les éléments ligne par ligne dans la mémoire flash. Par exemple, dans le second mode de réalisation qui vient d'être décrit, le stockage d'un caractère chinois de 12x12 pixels, occupera 24 lignes en mémoire flash, 2 lignes en mémoire flash permettant de stocker 1 ligne de 12 pixels du caractère chinois. Dans ce cas, 4 bits sont alors inutilisés tous les 2 octets.

De même, dans le premier mode de réalisation, pour stocker une icône programmable (16x20 pixels) on utilisera 3 octets par ligne de l'icône, soit 48 octets en tout.

La méthode utilisée pour le stockage en mémoire peut être optimisée d'un point de vue occupation mémoire, si nécessaire, au prix d'une plus grande complexité de traitement.

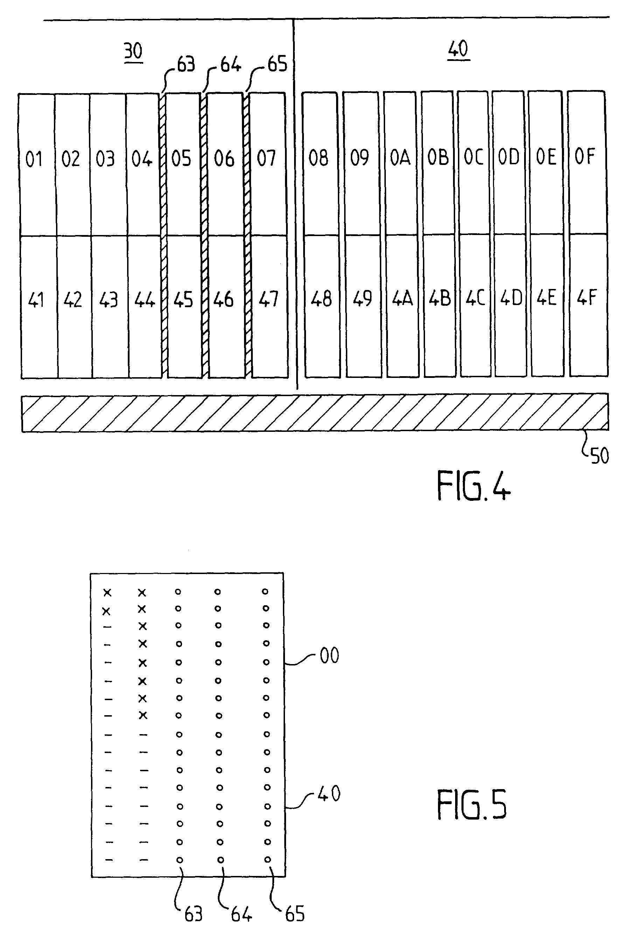

Sur la figure 4 on a représenté un exemple de découpage en blocs de l'écran. Dans chaque bloc on a indiqué l'adresse correspondante de la mémoire DDRAM (ces adresses sont exprimées en hexadécimales). Les adresses 00 à 07 et 40 à 47 de la mémoire DDRAM correspondent à la zone 30 et à la barre 50. A ces adresses sont donc stockées les adresses dans la mémoire CGRAM des blocs à afficher. Les adresses 08 à 0F et 48 à 4F de la mémoire DDRAM correspondent à la zone 40 de l'écran. A ces adresses sont donc stockées les adresses en CGROM des caractères à afficher. On notera que les trois colonnes 63, 64 et 65 ont été regroupées avec les icônes de la barre 50 pour former deux blocs qui dans cet exemple ne sont pas complets (3x16 + 10 points sont utilisés sur les 80 disponibles). Ces deux blocs correspondent aux adresses 00 et 40 dans la DDRAM. A titre d'exemple, on a indiqué sur la figure 5 une correspondance entre chaque élément de ces deux blocs et les points de l'écran (les ronds indiquent les points des colonnes 63, 64 et 65 ; les croix indiquent les dix icônes de la barre 50, et les traits indiquent les emplacements inutilisés).

Sur la figure 6 on a représenté un exemple de procédé d'affichage selon l'invention, sur un écran à cristaux liquides tel que représenté sur la figure 1, et commandé par un contrôleur d'écran de type semi-graphique. Il comporte les étapes suivantes : - étape 110 : programmation de la mémoire CGRAM du contrôleur.
Le microprocesseur 20 va lire soit dans la mémoire CGROM du contrôleur soit dans la mémoire FLASH 21 du téléphone, les éléments à afficher dans la zone 30: ces éléments sont inscrits dans la mémoire RAM 22 (étape 111). En tenant compte du plan de découpage en blocs de l'écran, il lit point par point, à l'étape 112, le contenu de la mémoire RAM 22 et le recopie dans la mémoire CGRAM du contrôleur de façon à former les 16 blocs Bi (i=0 à 15). - étape 120 : inscription dans la mémoire DDRAM des adresses en mémoire CGRAM et / ou CGROM des caractères à afficher à l'écran.

L'invention n'est pas limitée aux modes de réalisation qui viennent d'être décrits à titre d'exemple. En particulier, la zone de points 30 peut avoir une forme quelconque. De même, l'écran ne comporte pas nécessairement des icônes pré - dessinées, et lorsqu'il en comporte, elles peuvent être disposées de manières variées.

## Revendications

1. Equipement électronique (1) doté d'un écran à cristaux liquides (2) commandé par un contrôleur d'écran de type semi-graphique (10), caractérisé en ce que ledit écran comporte au moins une zone de points (30) pour afficher un graphique, et en ce que ledit équipement comporte des moyens de découpage (20, CGROM, FLASH) par blocs (Bi) dudit graphique, et des moyens d'inscription desdits blocs dans une mémoire (CGRAM) dite mémoire de blocs dudit contrôleur pour un affichage bloc par bloc dudit graphique.

2. Equipement électronique selon la revendication 1, caractérisé en ce qu'il comporte une interface homme - machine dans une langue à base d'idéogrammes, et en ce que ladite zone de points est notamment utilisée pour l'affichage desdits idéogrammes.

3. Equipement électronique selon la revendication 1, caractérisé en ce qu'il comporte une interface homme - machine dans une langue à base de caractères alphanumériques, et en ce que ledit écran comporte une zone de blocs de points (40) qui est utilisée pour l'affichage desdits caractères alphanumériques.

4. Equipement électronique selon la revendication 3, caractérisé en ce que ladite zone de points est notamment utilisée pour l'affichage d'un ou plusieurs caractères alphanumériques.

5. Equipement selon l'une des revendications 1 à 4, caractérisé en ce qu'au moins un des emplacements de la mémoire de blocs dudit contrôleur est utilisé pour commander l'allumage de points répartis dans ladite zone de points.

6. Equipement selon l'une des revendications 1 à 5, caractérisé en ce que ledit équipement est un téléphone.

7. Procédé d'affichage d'au moins un graphique sur un écran à cristaux liquides, caractérisé en ce qu'il comporte une étape (112) de découpage par blocs dudit graphique et une étape d'inscription (120) desdits blocs dans une mémoire dite mémoire de blocs d'un contrôleur d'écran semi-graphique pour un affichage bloc par bloc dudit graphique dans une zone de points dudit écran.

8. Procédé d'affichage selon la revendication 7, caractérisé en ce qu'il est appliqué à l'affichage d'idéogrammes.

9. Dispositif d'écran qui comporte un écran à cristaux liquides (2) et un contrôleur d'écran (10) de type semi-graphique, caractérisé en ce que ledit écran comporte au moins une zone de points (30). Pour afficher un graphique, et en ce que ledit contrôleur comporte une mémoire (CGRAM) dite mémoire de blocs pour stocker une décomposition en blocs dudit graphique pour un affichage bloc par bloc dans ladite zone de points.

10. Dispositif d'écran selon la revendication 9, caractérisé en ce que ledit écran comporte une zone de blocs de points qui prolonge ladite zone de points et qui est utilisée pour l'affichage d'informations constituées de caractères qui sont stockés dans une mémoire dite mémoire de caractères dudit contrôleur.
